# EUROPÄISCHE PATENTSCHRIFT

(11) **EP 3 078 100 B1**
(45) Veröffentlichungstag und Bekanntmachung des Hinweises auf die Patenterteilung: **05.09.2018**
(21) Anmeldenummer: 14821080.0
(22) Anmeldetag: 02.12.2014
(51) Int. Cl.: B21D 22/22, B65D 1/12, H02K 15/14, H02K 15/00, F04D 13/02, F04D 13/06, H02K 5/128

(54) **SPALTTOPF UND VERFAHREN ZUR HERSTELLUNG DESSELBEN**
CAN, AND A METHOD FOR PRODUCING THE SAME
CHEMISE D'ENTREFER ET PROCÉDÉ POUR LA RÉALISER

(30) Priorität: 05.12.2013 DE 102013018159
(43) Veröffentlichungstag der Anmeldung: 12.10.2016
(73) Patentinhaber: Klaus Union GmbH & Co. KG, 44795 Bochum (DE)
(72) Erfinder: ESCHNER, Thomas, 44797 Bochum (DE)
(74) Vertreter: Schneiders, Josef
(86) Internationale Anmeldenummer: PCT/EP2014/076217
(87) Internationale Veröffentlichungsnummer: WO 2015/082454

(56) Entgegenhaltungen:
- WO-A1-2010/136019
- DE-A1-102008 026 992
- DE-A1-102011 013 829
- DE-C1- 10 248 933
- GB-A- 307 907
- US-A- 6 039 827

## Beschreibung

Die Erfindung betrifft ein Verfahren zum Herstellen eines Spalttopfes gemäß dem Oberbegriff des Patentanspruchs 1, sowie einen entsprechenden Spalttopf.

Bei der Förderung von Fluiden, insbesondere im Bereich der Chemieindustrie, müssen meist hohe Anforderungen an die Dichtigkeit von Förderleitungen und Pumpen gestellt werden. Gleichzeitig muss ein guter Wirkungsgrad der Pumpen sichergestellt sein. Magnetgekuppelte Pumpen können statisch abgedichtet werden, indem ein feststehender Spalttopf zwischen einem antriebsseitigen Treiber und einem magnetisch angetriebenen abtriebsseitigen Läufer angeordnet ist und den Läufer umgibt. Der Spalttopf ist im Magnetfeld zwischen Treiber und Läufer angeordnet, und die magnetischen Kräfte werden durch den Spalttopf hindurch übertragen. An den Läufer kann ein Pumpenlaufrad gekoppelt sein. Treiber und Läufer sind mit Permanentmagneten versehen und möglichst nahe aneinander angeordnet, um einen effizienten Antrieb bereitstellen zu können. Die Wandstärke der Seitenwandung des Spalttopfes und Toleranzen bei der Herstellung desselben geben dabei vor, wie groß der Abstand bzw. Spalt zwischen Treiber und Läufer mindestens sein muss.

Häufig beträgt der Abstand und damit die Breite des zwischen Treiber und Läufer gebildeten Luftspalts z.B. nur etwa 4 mm, und der Spalttopf hat dann eine Wandstärke von z.B. 2 mm. Ein enger Spalt bzw. eine sehr knappe Auslegung der Wandstärke des Spalttopfes im Hinblick auf eine minimale Breite des Spalts liefert Vorteile beim Wirkungsgrad, insbesondere hinsichtlich einer Minimierung von Antriebsverlusten, reduziert aber gleichzeitig die Sicherheit und möglicherweise auch die Lebensdauer des Spalttopfes, je nachdem welche Fluide zu fördern sind. Um dennoch einen möglichst schmalen Spalt realisieren zu können, ist es von Interesse, den Spalttopf mit einer hohen Maßgenauigkeit herzustellen und die Geometrie seiner Seitenwand exakt entsprechend der Ausrichtung des Spalts auszuführen. Gleichzeitig muss der Spalttopf in der Pumpe derart montierbar sein, dass seine Seitenwandung in einer möglichst exakten Position angeordnet ist.

Die DE 10 2011 013 829 A1 offenbart einen keramischen Spalttopf mit einem Flansch aus einem metallischen Werkstoff.

Die US 6 039 827 A beschreibt einen Spalttopf aus Verbundwerkstoff mit einem Flansch.

Die Offenlegungsschrift DE 10 2008 026 992 A1 zeigt einen einstückigen, einen Flansch aufweisenden Spalttopf für eine Nassläuferpumpe, welcher durch Tiefziehen in Kombination mit Drückwalzen einer Seitenwandung und damit einhergehendes Einstellen einer Wandstärke der Seitenwandung hergestellt werden kann, wobei die Seitenwandung in den Flansch übergeht und der Spalttopf frei von Schweißnähten ist und die Seitenwandung eine verhältnismäßig geringe Wandstärke mit engem Toleranzbereich, also einer hohen Maßgenauigkeit aufweist, und wobei die Wandstärke der Seitenwandung geringer als eine Wandstärke der anderen Abschnitte des Spalttopfes ist.

Aufgabe ist, ein Verfahren zum Herstellen eines Spalttopfes bereitzustellen, durch welches der Spalttopf eine hohe Maßgenauigkeit aufweist. Gleichzeitig soll der Spalttopf auf leichte und/oder besonders exakte Weise in einer magnetgekuppelten Pumpe montierbar sein. Nicht zuletzt ist es Aufgabe, den Spalttopf so auszuführen, dass er auf einfache und kostengünstige Weise herstellbar ist.

Diese Aufgabe wird durch ein Verfahren gemäß Anspruch 1 und einen Spalttopf gemäß Anspruch 7 gelöst. Vorteilhafte Weiterbildungen der Erfindung sind Gegenstand der Unteransprüche.

Bei dem erfindungsgemäßen Verfahren zum Herstellen eines Spalttopfes, der aus einem Topfteil und einem Flanschteil gebildet ist, werden an dem Topfteil ein Boden sowie eine Seitenwandung ausgebildet, wobei das Topfteil tiefgezogen wird und durch Drückwalzen der Seitenwandung in eine Sollgeometrie mit einer definierten Wandstärke gebracht wird. Erfindungsgemäß wird vorgeschlagen, dass an der Seitenwandung eine Schnittstelle mit einer Materialstärke ausgebildet wird, die größer ist als die Wandstärke der Seitenwandung, wobei das Flanschteil an der Schnittstelle mit dem Topfteil verbindbar ist. Dabei kann die Schnittstelle insbesondere bereits zumindest teilweise beim Drückwalzen an dem Topfteil ausgebildet werden. Mit anderen Worten wird durch das erfindungsgemäße Verfahren ein Topfteil bereitgestellt, an welchem eine Art Lager für das separate Flanschteil derart gebildet wird, dass das Flanschteil mit dem Topfteil an der Schnittstelle koppelbar ist und Kräfte zwischen Topfteil und Flanschteil bzw. einer Pumpenkomponente, an welcher das Flanschteil befestigt ist, übertragen werden können.

Die Schnittstelle entspricht bevorzugt einem materialstarken Bereich, der durch beibehaltenes Vollmaterial erhöhter Wandstärke erzeugt wird. Bevorzugt wird die Schnittstelle als massive Schnittstelle in einem Randbereich am offenen Ende des Topfteils ausgebildet. Die Schnittstelle wird dann bevorzugt im Vollmaterial des Topfteils durch Nachbearbeitung geometrisch definiert.

Die Ausführung des Topfteils mit einer Schnittstelle, an welcher sie mit dem Flanschteil gekoppelt werden kann, um einen zweiteiligen Spalttopf zu bilden, liefert den Vorteil, dass das Topfteil zunächst unabhängig von der Art und Weise hergestellt werden kann, in der die Anbindung an die Pumpe erfolgt. Das Flanschteil wird separat hergestellt. Dies liefert eine hohe Variabilität und auch eine gute Flexibilität bei der Auslegung, bei gleichzeitiger Möglichkeit des vorteilhaften und kostengünstigen Einsatzes von Gleichteilen.

Durch das Drückwalzen kann das Topfteil mit einer verhältnismäßig dünnen Seitenwandung bereitgestellt werden, z.B. im Bereich von 1 mm, wobei die Wandstärke der Seitenwandung auch in einem engen Toleranzbereich liegen kann, insbesondere mit Abweichungen kleiner 1/10.

Die dünne Wandstärke, aber auch der enge Toleranzbereich, bieten den Vorteil einer hohen Antriebseffizienz bei einer magnetgekuppelten Pumpe, denn Treiber und Läufer der Pumpe können besonders nahe beieinander angeordnet werden. Gleichzeitig können die Herstellungskosten niedrig gehalten werden, da Nacharbeiten an dem Topfteil nicht mehr erforderlich sind. Vielmehr kann das Topfteil mit einer derart hohen Genauigkeit und einem derart engen Toleranzbereich hergestellt werden, dass ein Plandrehen oder Schleifen oder irgendein weiteres Formgebungsverfahren nicht mehr erforderlich ist. Es muss lediglich das Topfteil mit dem Flanschteil verbunden werden.

Unter Drückwalzen ist dabei bevorzugt ein Kaltverformungsverfahren zu verstehen, bei welchem eine (Seiten-)Wandung des Topfteils auf eine definierte Stärke gebracht wird und eine definierte Ausrichtung erhält, insbesondere eine zylindrische Geometrie mit einer hohen Maßhaltigkeit, d.h. einer geringen Abweichung von der zylindrischen Form in radialer Richtung (Genauigkeit besser 1/10). Dabei kann das Drückwalzen zu einer Verlängerung der zylindrischen Seitenwandung in axialer Richtung führen, ohne dass sich der Durchmesser des Topfteils, insbesondere der Abstand zwischen zwei jeweils durch die Seitenwandung in axialer Richtung verlaufenden Mittellinien, ändert.

Als eine Sollgeometrie ist dabei eine Geometrie zu verstehen, welche das Topfteil am Ende des Herstellungsverfahrens annehmen soll, insbesondere im Bereich der Seitenwandung und des Bodens. Die Sollgeometrie ist bevorzugt durch die jeweilige Wandstärke der Seitenwandung und des Bodens, einen Außendurchmesser und Toleranzbereiche für die jeweiligen Maße definiert.

Gemäß einem Ausführungsbeispiel wird an der Schnittstelle ein Absatz ausgebildet, an welchem das Flanschteil als separates Maschinenelement in definierter Ausrichtung zur Anlage gebracht werden kann. Als separates Maschinenelement ist dabei ein Flanschteil aufzufassen, welches unabhängig von dem Topfteil ist, insbesondere unabhängig herstellbar und ggf. auch aus einem anderen Material, und durch welches ein mindestens zweiteiliger Spalttopf gebildet werden kann. Bevorzugt wird der Absatz durch eine Nachbearbeitung wie z.B. ein spanendes Verfahren, insbesondere Drehen eingebracht. Dabei kann der Absatz durch das Einbringen einer ersten und einer zweiten Teilmantelfläche gebildet werden, wobei zumindest eine der Teilmantelflächen als eine Zentrierung dienen kann. Ferner kann an dem Absatz eine Stirnfläche ausgebildet werden, über welche insbesondere orthogonal auf die Stirnfläche wirkende Druckkräfte übertragbar sind. Durch einen solchen Absatz mit Stirnfläche kann auf einfache Weise ein Lager gebildet werden, durch welches Kräfte von dem Topfteil auf das Flanschteil übertragen werden können, ohne dass hierdurch Materialspannungen oder Verwindungen hervorgerufen werden, welche die Sollgeometrie der Seitenwandung nachteilig beeinflussen. Die Kräfte können in Richtung der Symmetrieachse weitergeleitet werden. Ein Abreißen des Topfteils von dem Flanschteil kann ausgeschlossen werden, insbesondere weil die Stirnfläche in einer ausreichenden Größe dimensioniert werden kann, um die Kräfte mit einem ausreichenden Sicherheitsfaktor auf das Flanschteil zu übertragen.

Gemäß einem Ausführungsbeispiel wird nach dem Drückwalzen und dem Ausbilden der Schnittstelle das Flanschteil vom Boden des Topfteils her auf dieses aufgesteckt.

Gemäß der Erfindung wird das Topfteil mit dem Flanschteil durch eine Dichtnaht verbunden. Die Dichtnaht ist bevorzugt eine umlaufende Dichtnaht. Die Dichtnaht nimmt nicht die beim Betrieb der Pumpe über das im Spalttopf befindliche Förderfluid übertragenen Kräfte auf, die in Richtung des Spalttopfbodens gerichtet sind. Diese Kräfte werden über die formschlüssige Verbindung der Schnittstelle vom Topfteil auf das Flanschteil übertragen. Ein Reißen der Dichtnaht aufgrund der angreifenden Kräfte ist somit nicht zu befürchten. Die gemäß der Erfindung erzeugte Verbindung ist somit besonders sicher. Bevorzugt ist die Dichtnaht eine Dichtschweißung, die mittels Plasmaschweißen eingebracht wird.

Gemäß einem weiteren Ausführungsbeispiel wird an der Schnittstelle im Übergang zu der Seitenwandung eine Schrägfläche ausgebildet und angrenzend an die Schrägfläche eine zylindrische Teilmantelfläche ausgebildet. Hierdurch kann eine Fase bereitgestellt werden, welche das Aufstecken des Flanschteils erleichtert, und eine Zentrierung des Flanschteils in Bezug auf das Topfteil kann auf einfache Weise erfolgen.

Gemäß einem weiteren Ausführungsbeispiel wird nach dem Tiefziehen beim Drückwalzen der Seitenwandung, abgesehen von dem Bereich der Schnittstelle, die Wandstärke auf 1 mm mit einer Toleranz von weniger als 1/10 gebracht und die Seitenwandung in eine zylindrische Geometrie gebracht. Hierdurch kann ein Topfteil mit einer hohen Genauigkeit bereitgestellt werden, und eine hohe Antriebseffizienz einer Pumpe mit einem solchen Topfteil kann sichergestellt werden. Auch sind bei dieser Genauigkeit weitere Nachbearbeitungen an der Seitenwandung nicht mehr erforderlich.

Bei dem Flanschteil des erfindungsgemäß hergestellten Spalttopfes sind Befestigungsmittel zum Anordnen des Spalttopfes in einer Pumpe vorgesehen. Dabei ist vorgesehen, dass das Flanschteil als Ringkörper ausgebildet ist und an einer nach innen zu einer Symmetrieachse des Ringkörpers weisenden Seite eine Schnittstelle aufweist, die ein Lager für das Topfteil bildet. Die Befestigungsmittel können z.B. Durchgangsbohrungen sein oder Innengewindebohrungen.

Bevorzugt weist die Schnittstelle des Flanschteils einen Vorsprung auf und ist dazu ausgebildet, mit dem Vorsprung an einem korrespondierenden Absatz des Topfteils zur Anlage zu kommen. Dabei sollte zur effizienten und sicheren Aufnahme der im Pumpenbetrieb wirkenden Kräfte der Vorsprung an einer dem Boden des Topfteils zugewandten Flanke des am Topfteil ausgebildeten Absatzes anliegen.

Anhand der Zeichnungsfiguren werden im Folgenden Ausführungsbeispiele der Erfindung beschrieben. Es zeigen:
- Figur 1:: eine Schnittansicht eines Topfteils in einem Zustand nach Tiefziehen und Drückwalzen;
- Figur 2:: eine Schnittansicht eines Flanschteils, welches dazu ausgebildet ist, an dem in der Fig. 1 gezeigten Topfteil zur Anlage zu kommen;
- Figur 3:: eine Schnittansicht eines Spalttopfes, welcher aus dem in der Fig. 1 gezeigten Topfteil und dem in der Fig. 2 gezeigten Flanschteil gebildet ist, wobei das Topfteil und das Flanschteil stoffschlüssig miteinander verbunden sind; und
- Figur 4:: eine Draufsicht seitens des Flanschteils auf den in der Fig. 3 gezeigten Spalttopf.

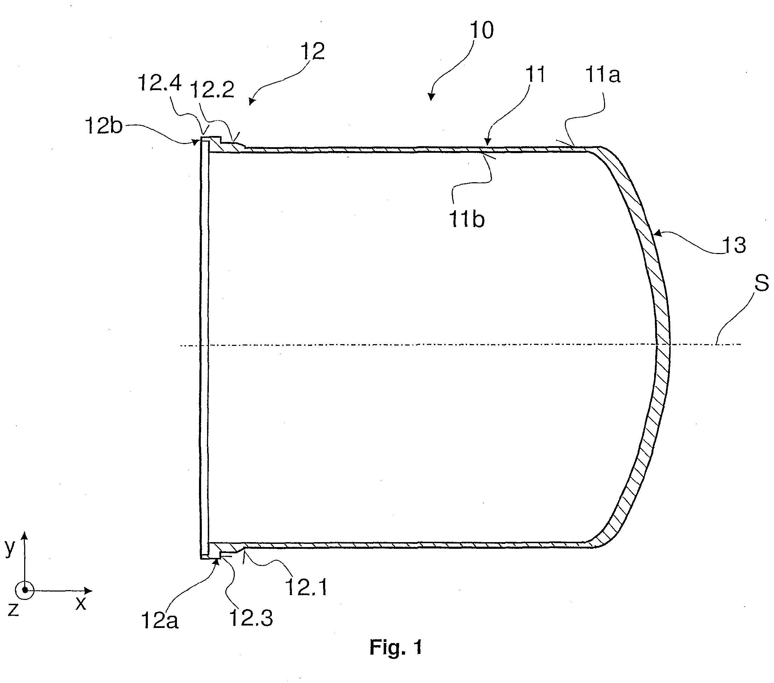

In der Fig. 1 ist ein tiefgezogenes Topfteil 10 mit einer Symmetrieachse S gezeigt, welches eine Seitenwandung 11 und einen Boden 13 sowie einen Randbereich 12 aufweist. Die Seitenwandung 11 weist eine Außenmantelfläche 11a auf, die bevorzugt streng parallel zu einer Innenmantelfläche 11b verläuft, wobei die Seitenwandung in einer zylindrischen Geometrie vorliegt. Die Seitenwandung 11 weist eine Wandstärke auf, die kleiner ist als die Wandstärke des Bodens 13, insbesondere eine Wandstärke von 1 mm im Vergleich zu der Wandstärke von 3 mm des Bodens. Die Seitenwandung 11 ist drückgewalzt, d.h. durch Drückwalzen in eine Sollgeometrie gebracht bei möglichst geringer Toleranz.

Der Randbereich 12 ist an dem offenen Ende des Topfteils 10 vorgesehen. Der Randbereich 12 weist eine Wandstärke bzw. Materialstäke auf, die größer ist als die Wandstärke der Seitenwandung 11. In dem Randbereich ist ein Absatz 12a vorgesehen, welcher dazu ausgebildet ist, Zugkräfte zwischen der Seitenwandung 11 und einem nicht dargestellten Flanschteil zu übertragen. Der Randbereich 12 weist mehrere Flächen auf, die z.B. durch eine Nachbearbeitung wie Drehen oder Fräsen in den Randbereich 12 eingebracht werden. Die Seitenwandung 11 geht in eine Schrägfläche 12.1 über, die als Fase zwischen der Seitenwandung 11 und einer ersten Teilmantelfläche 12.2 ausgebildet ist. Zwischen der ersten Teilmantelfläche 12.2 und einer zweiten Teilmantelfläche 12.4 ist eine Stirnfläche 12.3 ausgebildet, an welcher eine parallel zu der Symmetrieachse S wirkende Kraftkomponente übertragen werden kann. An dem offenen Ende des Topfteils 10 ist ein Steg 12b in dem Randbereich 12 ausgebildet, über welchen das Topfteil 10 mit dem nicht dargestellten Flanschteil verbunden werden kann. Der Steg 12b kann z.B. dadurch gebildet werden, dass in den Randbereich 12 ein Absatz gedreht oder gefräst wird. Der Randbereich 12 ist in der Art einer ringförmigen Verstärkung ausgebildet, die das offene Ende des Topfteils 10 stabilisiert und eine Schnittstelle zu dem Flanschteil bildet.

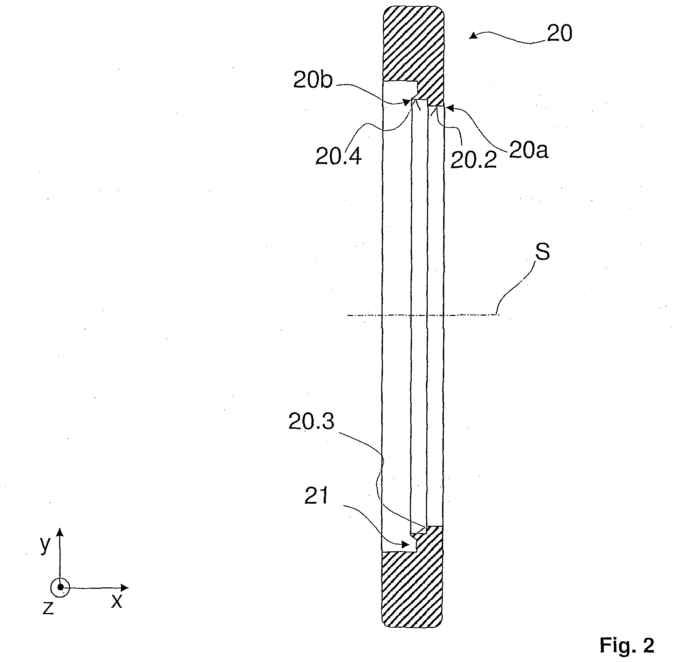

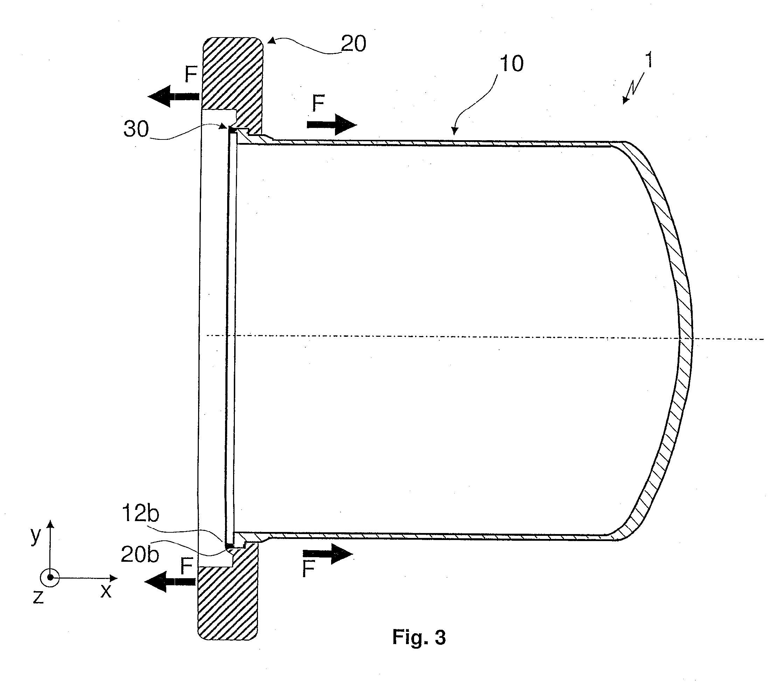

In der Fig. 2 ist ein Flanschteil 20 gezeigt, welches einen radialen Vorsprung 20a aufweist, der einen Hinterschnitt zum Aufnehmen von Zugkräften bildet. Der Vorsprung 20a ist durch eine erste Teilmantelfläche 20.2 und eine Stirnfläche 20.3 gebildet, welche an eine zweite Teilmantelfläche 20.4 angrenzt. Durch diese drei Flächen wird eine Geometrie bereitgestellt, welche mit einer korrespondierenden Geometrie des in der Fig. 1 gezeigten Topfteils koppelbar ist. An dem Flanschteil 20 ist ferner eine Ausnehmung 21 ausgebildet, durch welche ein Fortsatz 20b zwischen der Ausnehmung 21 und der zweiten Teilmantelfläche 20.4 bereitgestellt wird. Der Fortsatz 20b bildet zusammen mit einem Steg des Topfteils einen Bereich, in welchem eine Dichtnaht vorgesehen werden kann, wie im Zusammenhang mit der Fig. 3 beschrieben.

In der Fig. 3 ist ein aus dem in der Fig. 1 gezeigten Topfteil 10 und dem in der Fig. 2 gezeigten Flanschteil 20 gebildeter Spalttopf 1 gezeigt, welche dichtend aneinander zur Anlage kommen. Das Flanschteil 20 ist an dem Topfteil 10 zentriert, insbesondere über die erste und/oder zweite Teilmantelfläche des Topfteils bzw. des Flanschteils. Kräfte, die an dem Topfteil 10 gemäß den angedeuteten Kraftpfeilen F wirken, können über den Vorsprung auf das Flanschteil 20 übertagen werden. Das Flanschteil 20 ist über eine Dichtnaht 30 mit dem Topfteil 10 verbunden, wobei die Dichtnaht 30 an dem Steg 12b des Topfteils 10 und dem Fortsatz 20b des Flanschteils ausgebildet ist. Der Steg 12b und der Fortsatz 20b bilden dabei zusammen eine Art in Richtung der Symmetrieachse hervorstehenden Ring, an welchem eine stoffschlüssige Verbindung der beiden Teile erfolgen kann, bevorzugt durch Schweißen, insbesondere Plasmaschweißen. Durch den hervorstehenden Ring kann vermieden werden, dass eine Wärmeeinwirkung beim Schweißen zu einem Verziehen oder Verkanten der beiden Teile erfolgt, und die in den Teilen aufgrund Wärmedehnung erzeugten Spannungen können minimiert werden. Dabei muss die Dichtnaht nur eine abdichtende Funktion erfüllen. Die Stabilität des Spalttopfes kann durch die in radialer Richtung über die Teilmantelflächen definierte Anordnung und den über den Vorsprung geleiteten Kraftfluss sichergestellt werden.

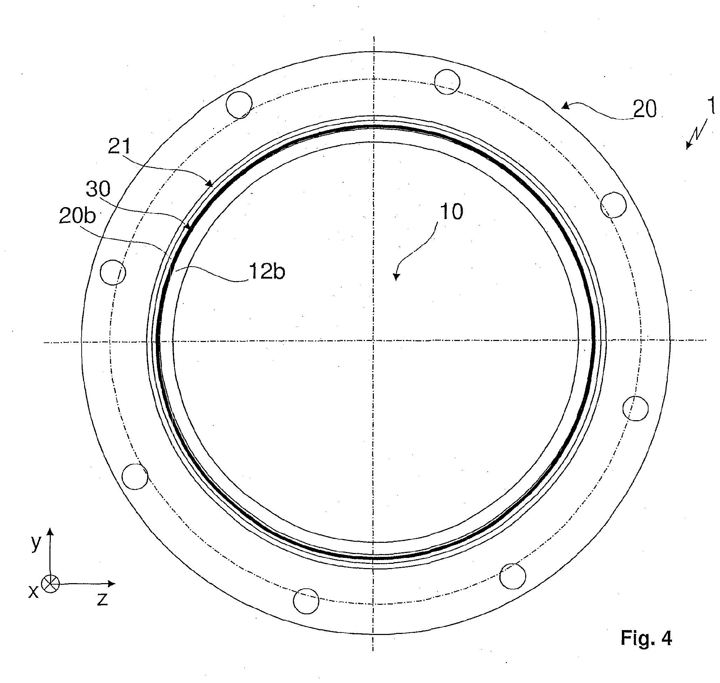

In der Fig. 4 ist der Spalttopf 1 seitens des Flanschteils 20 gezeigt, wobei die Dichtnaht 30 als umlaufende Dichtschweißung an dem Steg 12b und dem Fortsatz 20b ausgeführt ist. Radial außen von der Dichtschweißung 30 liegt die Ausnehmung 21, und radial innen von der Dichtschweißung 30 liegt ein Absatz, durch welchen der Steg 12b gebildet ist. Der Fortsatz 20b und der Steg 12b stehen rillenartig hervor und sind dadurch leicht zugänglich für ein Werkzeug, insbesondere ein Schweißwerkzeug zum Plasmaschweißen.

### Bezuaszeichenliste

- 1: Spalttopf

- 10: Topfteil
- 11: Seitenwandung
- 11a: Außenmantelfläche
- 11b: Innenmantelfläche
- 12: Schnittstelle
- 12a: Absatz
- 12b: Steg
- 12.1: Schrägfläche
- 12.2: erste Teilmantelfläche
- 12.3: Stirnfläche
- 12.4: zweite Teilmantelfläche
- 13: Boden

- 20: Flanschteil
- 20a: Vorsprung/Hinterschnitt
- 20b: Fortsatz
- 20.2: erste Teilmantelfläche
- 20.3: Stirnfläche
- 20.4: zweite Teilmantelfläche
- 21: Ausnehmung

- 30: Dichtschweißung

- F: Kraft(-richtung)
- S: Symmetrieachse

## Patentansprüche

1. Verfahren zum Herstellen eines Spalttopfes (1), der aus einem Topfteil (10) und einem Flanschteil (20) gebildet wird, wobei an dem Topfteil (10) ein Boden (13) sowie eine Seitenwandung (11) ausgebildet werden, und wobei das Topfteil (10) tiefgezogen wird und durch Drückwalzen der Seitenwandung (11) in eine Sollgeometrie mit einer definierten Wandstärke gebracht wird,
**dadurch gekennzeichnet, dass** an der Seitenwandung (11) eine Schnittstelle (12) mit einer Materialstärke ausgebildet wird, die größer ist als die Wandstärke der Seitenwandung (11), wobei das Flanschteil (20) an der Schnittstelle (12) mit dem Topfteil (10) verbindbar ist, wobei das Topfteil (10) mit dem Flanschteil (20) durch eine Dichtnaht (30) verbunden wird, wobei eine auf das Topfteil (10) in Richtung des Bodens (13) des Topfteils (10) einwirkende Kraft nicht über die Dichtnaht (30), sondern über eine durch die Schnittstelle gebildete formschlüssige Verbindung vom Topfteil (10) auf das Flanschteil (20) übertragbar ist.

2. Verfahren nach Anspruch 1, **dadurch gekennzeichnet, dass** an der Schnittstelle (12) ein Absatz ausgebildet wird, an welchem das Flanschteil (20) als separates Maschinenelement in definierter Ausrichtung zur Anlage bringbar ist.

3. Verfahren nach Anspruch 2, **dadurch gekennzeichnet, dass** über den Absatz eine Kraft, die auf das Topfteil (10) einwirkt, auf das Flanschteil (20) übertragbar ist.

4. Verfahren nach einem der Ansprüche 1 bis 3, **dadurch gekennzeichnet, dass** nach dem Drückwalzen und dem Ausbilden der Schnittstelle (12) das Flanschteil (20) auf das Topfteil (10) gesteckt wird, insbesondere seitens des Bodens (13) des Topfteils (10).

5. Verfahren nach einem der vorhergehenden Ansprüche, **dadurch gekennzeichnet, dass** an der Schnittstelle (12) im Übergang zu der Seitenwandung (11) eine Schrägfläche (12.1) ausgebildet wird und angrenzend an die Schrägfläche (12.1) eine zylindrische Teilmantelfläche (12.2) ausgebildet wird.

6. Verfahren nach einem der vorhergehenden Ansprüche, **dadurch gekennzeichnet, dass** nach dem Tiefziehen beim Drückwalzen der Seitenwandung (11) die Wandstärke auf 1 mm mit einer Toleranz von weniger als 1/10 gebracht wird und die Seitenwandung (11) in eine zylindrische Geometrie gebracht wird.

7. Spalttopf (1) mit einem Topfteil (10) und einem Flanschteil (20), wobei das Topfteil (10) einen Boden (13) sowie eine Seitenwandung (11) aufweist, und wobei das Topfteil (10) ein Tiefziehteil ist, dessen Seitenwandung (11) drückgewalzt ist und eine definierte Wandstärke aufweist,
**dadurch gekennzeichnet, dass** das Topfteil (10) eine Schnittstelle (12) mit einer Materialstärke aufweist, die größer ist als die Wandstärke der Seitenwandung (11), wobei die Schnittstelle (12) ein Lager für das Flanschteil (20) bildet, wobei das Topfteil (10) und das Flanschteil (20) über eine Dichtnaht (30) miteinander verbunden sind, wobei eine auf das Topfteil (10) in Richtung des Bodens (13) des Topfteils (10) einwirkende Kraft nicht über die Dichtnaht (30), sondern über eine durch die Schnittstelle gebildete formschlüssige Verbindung vom Topfteil (10) auf das Flanschteil (20) übertragbar ist.

## Claims

1. A method for producing a can (1) which is formed from a can part (10) and a flange part (20), wherein a base (13) and a lateral wall (11) are formed on the can part (10), and wherein the can part (10) is deep drawn and made into a target geometry with a defined wall thickness by virtue of the lateral wall (11) being flow formed,
**characterized in that** the lateral wall (11) has formed on it an interface (12) with a material thickness which is greater than the wall thickness of the lateral wall (11), wherein the flange part (20) can be connected to the can part (10) at the interface (12), wherein the can part (10) is connected to the flange part (20) by a sealing seam (30), and wherein a force acting on the can part (10) in the direction of the base (13) of the can part (10) can be transmitted from the can part (10) to the flange part (20) not via the sealing seam (30), but via a form-fitting connection formed by the interface.

2. The method as claimed in claim 1, **characterized in that** the interface (12) has formed on it a shoulder, against which the flange part (20), as a separate machine element, can be brought into abutment in a defined orientation.

3. The method as claimed in claim 2, **characterized in that** a force which acts on the can part (10) can be transmitted to the flange part (20) via the shoulder.

4. The method as claimed in one of claims 1 to 3, **characterized in that**, following the flow forming and the formation of the interface (12), the flange part (20) is fitted onto the can part (10), in particular from the side of the base (13) of the can part (10).

5. The method as claimed in one of the preceding claims,
**characterized in that** a sloping surface (12.1) is formed on the interface (12) at the transition to the lateral wall (11), and a cylindrical lateral sub-surface (12.2) is formed thereon adjacent to the sloping surface (12.1).

6. The method as claimed in one of the preceding claims,
**characterized in that**, following the deep-drawing operation, during the flow forming of the lateral wall (11) the wall thickness is brought to 1 mm at the tolerance of less than 1/10 and the lateral wall (11) is made into a cylindrical geometry.

7. A can (1) having a can part (10) and a flange part (20), wherein the can part (10) has a base (13) and a lateral wall (11), and wherein the can part (10) is a deep-drawn part of which the lateral wall (11) is flow formed and has a defined wall thickness,
**characterized in that** the can part (10) has an interface (12) with a material thickness which is greater than the wall thickness of the lateral wall (11), wherein the interface (12) forms a bearing for the flange part (20), wherein the can part (10) and the flange part (20) are connected to one another via a sealing seam (30), and wherein a force acting on the can part (10) in the direction of the base (13) of the can part (10) can be transmitted from the can part (10) to the flange part (20) not via the sealing seam (30), but via a form-fitting connection formed by the interface.

## Revendications

1. Procédé de fabrication d'un pot d'entrefer (1), lequel est formé par une partie pot (10) et une partie bride (20), un fond (13) ainsi qu'une paroi latérale (11) étant formés sur la partie pot (10), et la partie pot (10) étant réalisée par emboutissage profond et amenée dans une forme géométrique voulue ayant une épaisseur de paroi définie par laminage sous pression de la paroi latérale (11),
**caractérisé en ce qu'**au niveau de la paroi latérale (11) est formée une interface (12) ayant une épaisseur de matériau qui est supérieure à l'épaisseur de matériau de la paroi latérale (11), la partie bride (20) pouvant être reliée à la partie pot (10) au niveau de l'interface (12), la partie pot (10) étant reliée à la partie bride (20) par un cordon d'étanchéité (30), une force agissant sur la partie pot (10) en direction du fond (13) de la partie pot (10) pouvant être transmise de la partie pot (10) à la partie bride (20) non pas par le biais du cordon d'étanchéité (30), mais par le biais d'une liaison par complémentarité de formes formée par l'interface.

2. Procédé selon la revendication 1, **caractérisé en ce qu'**un talon est formé au niveau de l'interface (12), contre lequel la partie bride (20) peut être amenée à reposer en tant qu'élément mécanique séparé dans une orientation définie.

3. Procédé selon la revendication 2, **caractérisé en ce qu'**une force qui agit sur la partie pot (10) peut être transmise à la partie bride (20) par le biais du talon.

4. Procédé selon l'une des revendications 1 à 3,
**caractérisé en ce que** la partie bride (20) est enfichée sur la partie pot (10), notamment du côté du fond (13) de la partie pot (10) après le laminage sous pression et la formation de l'interface (12).

5. Procédé selon l'une des revendications précédentes, **caractérisé en ce qu'**une surface inclinée (12.1) est formée au niveau de l'interface (12) dans la transition vers la paroi latérale (11) et une surface d'enveloppe partielle (12.2) cylindrique est formée adjacente à la surface inclinée (12.1).

6. Procédé selon l'une des revendications précédentes, **caractérisé en ce qu'**après l'emboutissage profond, lors du laminage sous pression de la paroi latérale (11), l'épaisseur de paroi est amenée à 1 mm avec une tolérance inférieure à 1/10 et la paroi latérale (11) est amenée dans une forme géométrique cylindrique.

7. Pot d'entrefer (1) comprenant une partie pot (10) et une partie bride (20), la partie pot (10) possédant un fond (13) ainsi qu'une paroi latérale (11), et la partie pot (10) étant une pièce réalisée par emboutissage profond dont la paroi latérale (11) est laminée sous pression et possède une épaisseur de paroi définie,
**caractérisé en ce que** la partie pot (10) possède une interface (12) ayant une épaisseur de matériau qui est supérieure à l'épaisseur de matériau de la paroi latérale (11), l'interface (12) formant un palier pour la partie bride (20), la partie pot (10) et la partie bride (20) étant reliées ensemble par le biais d'un cordon d'étanchéité (30), une force agissant sur la partie pot (10) en direction du fond (13) de la partie pot (10) pouvant être transmise de la partie pot (10) à la partie bride (20) non pas par le biais du cordon d'étanchéité (30), mais par le biais d'une liaison par complémentarité de formes formée par l'interface.
